Europäisches Patentamt

European Patent Office    (11) Publication number: **0 331 241**

Office européen des brevets    **A2**

(12) **EUROPEAN PATENT APPLICATION**

(21) Application number: 89200439.1

(51) Int. Cl.⁴: **B60N 1/00**

(22) Date of filing: 22.02.89

(30) Priority: 29.02.88 IT 1958488

(43) Date of publication of application:
06.09.89 Bulletin 89/36

(84) Designated Contracting States:
DE ES FR GB

(71) Applicant: SAME S.p.A.
Viale F. Cassani, 14
I-24047 Treviglio Bergamo(IT)

(72) Inventor: Todeschini, Eugenio
Via Rillosi 11
I-24100 Bergamo(IT)
Inventor: Hampel, Gerald
Via Mazzini 2b
Lugano(CH)

(74) Representative: De Carli, Erberto et al
ING. BARZANO' & ZANARDO MILANO S.p.A.
Via Borgonuovo, 10
I-20121 Milano(IT)

(54) Seat for vehicles, in particular driver's seat for tractors.

(57) The seat is formed by two flanked parts, preferably two specular half-seats, separated form each other according to a vertical longitudinal plane and with each one being provided with a sitting portion and a back portion. One of said two parts is transversely movable relatively to the other parts, to a position in which said one part is in a position spaced apart from said other part. Into the room between said two parts separated from each other a third part can be inserted with possibility of removal, with said third part being formed by a sitting portion and a back portion, so as to convert the seat from a one-person seat into a seat for two persons. The movable part of the seat is guided by transversal guides provided in correspondence of the sitting portion, as well as of the back portion

According to a form of practical embodiment, both seat parts are transversely movable relatively to a support basis, in opposite directions.

Fig.1

## SEAT FOR VEHICLES, IN PARTICULAR DRIVER'S SEAT FOR TRACTORS

The present invention relates to a seat for vehicles, in particular to a driver's seat for tractors.

Normally, in tractors, or in other vehicles destined to particular uses, such as earthworks or for the handling of materials, only one driver's seat is provided for the operator, in general in a central position relatively to the transversal dimension or the vehicle

This fact does not make it possible that during vehicle's traveling, for example when traveling between the normal parking area and the working site, the vehicle may accomodate aboard or inside the cab, besides the driver, also a further person, who may be useful or necessary on the working site, in order to assist the operator.

However, in particular tractors with an auxiliary seat for transporting a second person are known, with such a seat being positioned, e. g. , on the wheel shelter.

These are solution which offer to the passenger just an emergency accomodation, with a very poor traveling comfort, in particular when the tractor travels on bumpy trails, or which require a considerably large room, and result to be cumbersome when the use of the passenger's seat is not required, by wasting room useful for other purposes, or rendering more difficult the access and/or the drive of the vehicle by the driver.

The purpose of the present invention is of providing a seat for vehicles, in particular a driver's seat for tractors or other vehicles for special uses, such as vehicles for earthworks or for movimg materials, which makes it possible also a passenger, besides the vehicle driver, to be carried on board in a comfortable position, without wasting useful room when the need of transporting a second person does not exist.

This purpose is achieved, according to the present invention, by means of a seat for vehicles, in particular a driver's seat for tractors, of the type provided with a sitting portion and a back portion, characterized in that it comprises two flanked parts, separated according to a vertical longitudinal plane of the seat, and that at least one of said seat parts is movable relatively to a support base in the transversal direction to a position spaced apart from the other seat part, in which position between the two spaced-apart seat parts at least a third part can be inserted with possibility of removal, with said third part being provided with a sitting portion and a back portion.

A seat according to the present invention is therefore a splittable seat which, in its normal position of use, has both its parts resting against each other and has a width suitable for one person only, without wasting room in addition to its normal overall dimensions, or occupying an additional room, whilst in its position in which its two constituting parts are separated from each other, it becomes a double seat or bench for two persons, after that inside the room existing between said two parts spaced apart from each other, the third part of the seat is inserted. By means of such a solution, only the necessary room for accomodating the passenger beside the driver is occupied, whenever required

The third part can be normally housed inside an unused area of the tractor, where is does not disturb, or it can be constituted by a sitting portion and a back portion separated from each other, stored by being fastened to the rear of the single-person driver's seat, e.g., inside a suitable container bag, when they are not used.

Advantageously, to one of the two flanked seat parts, or to the support base, tranversal guides are fastened, inside which counter-guides fastened to the other seat part can slide up to reach their prefixed stroke-end position. In its turn, the structure comprising both seat parts, and the guides and the counter-guides can be so installed, as to be able to slide inside longitudinal guides fastened to the seat base bed, in order to make it possible the whole seat to be adjusted in the longitudinal direction, without thereby the possibility of converting the seat into a double seat for two persons being lost.

A seat according to the present invention, besides not occupying room when the transportation of a second person is not required, is furthermore particularly convenient and rapid to be converted from a single-person seat into a double-person seat, and vice-versa, because it does not require the use of tools or of complex of uncomfortable operations for such a transformation to be accied out.

Further details and advantages of the invention will better result from the following disclosure, referred to two examples of practical embodiment of the same invention, illustrated in the hereto attached drawings, in which:

Figure 1 shows a partially cutaway elevation front view of a seat according to the present invention, in its position of use as a single-person seat;

Figure 2 shows a partially cutaway plan view of the seat of Figure 1;

Figure 3 shows a partially cutaway elevation front view of a seat according to the present invention in the position of use as a double seat for two persons;

Figure 4 shows a partailly cutaway plan view of the seat of Figure 3;

Figure 5 shows a sectional view of the seat of Figure 3, according to path V-V;

Figure 6 shows a partially cutaway elevation front view of a modified seat, in its widened position;

Figure 7 shows a plan view of the seat of Figure 6 in its widened position.

Referring to the above figures, a seat 1 for vehicles, in particular a driver's seat for a tractor or another operative vehicle, such as a vehicle for earthworks or for moving materials, is provided, in a per se known way, with a sitting portion 2 and a back portion 3.

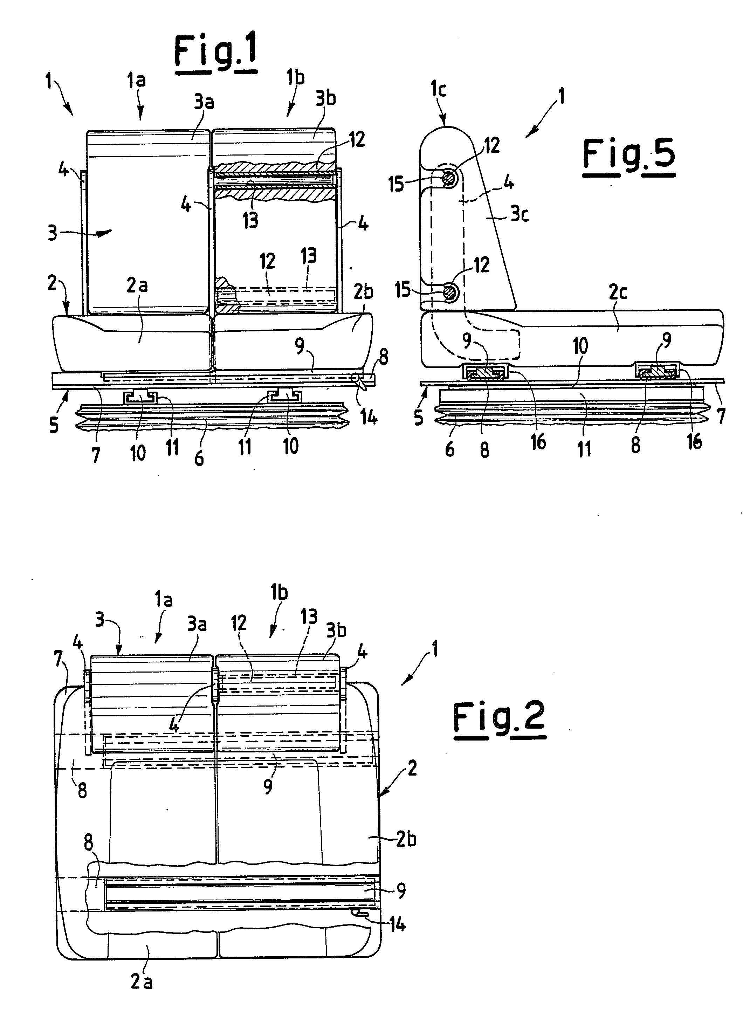

According to the invention, the seat 1 is composed by two flanked positions, respectively indicated by the reference numerals 1a and 1b, separated from each other according to a longitudinal vertical plane, which can advantageously be the vertical plane of symmetry of the seat, so as to have two symmetrical seat parts, having a same width, as shown in Figures 1 and 2.

Each seat part 1a, 1b, comprises a sitting portion, respectively 2a and 2b, and a back portion, respectively 3a and 3b, respectively connected with each other by means of connecting shoulders 4, of a per se known type, so as to respectively form seat parts provided with a sitting plane portion and a back portion stably connected with each other. Instead of being constituted by separate portions, e.g , as stuffed portions defining two specularly symmetrical half-seats, the sitting portion and the back portion of each seat part 1a and 1b could be also made as one single piece, e.g., of plastic material, so as to form two specularly symmetrical half-cradles.

The seat parts 1a and 1b are supported by a support base 5, which in its turn is supportes by a base bed 6 of a per se known type. The base 5 is advantageously constituted by a base plate 7, substantially having the shape of the plan of the seat 1, and provided, on its upper face, with a pair of parallel fixed guides 8, extending in the transversal direction of the seat 1, over most width of the same seat.

In the example shown in Figures from 1 to 5, the left-hand part 1a of the seat 1 is made integral with the guides 8 (and hence with the base 5), in a way not illustrated in greater detail, and the right-hand part 1b of the same seat 1 is provided, on its lowermost side, with parallel transversal counter-guides 9, slidingly cooperating with the fixed guides 8, so that the seat part 1b is mobile relatively to the support base 5, and therefore relatively to the seat part 1a, in the transversal direction of the seat 1, up to reach a position spaced apart from the seat part 1a. The counter-guides 9 advantageously have such a length, as to extend beyond the seat part 1b in the direction towards the seat part 1a, occupying, in the normal position of the seat, a larger portion of the transversal dimension of the seat part 1a, under it.

In its turn, the base 5 is provided, on its lowermost side, with a pair of parallel guides 10, extending in the longitudinal direction, and cooperating with relevant parallel longitudinal conjugated guides 11, fastened to the base bed 6, so that the seat 1 can be adjusted in the longitudinal direction on said base bed 6.

As it results from Figures 1, 2, 3 and 4, from the back 3a of the seat part 1a, two parallel rod-shaped elements 12, positioned at different heights, protrude, and extend over a length substantially corresponding to the width of the back portion 3b of the seat part 1b and penetrate corresponding tubular elements 13 provided inside the back portion 3b. The elements 12 constitute hence guides for the back portion 3b.

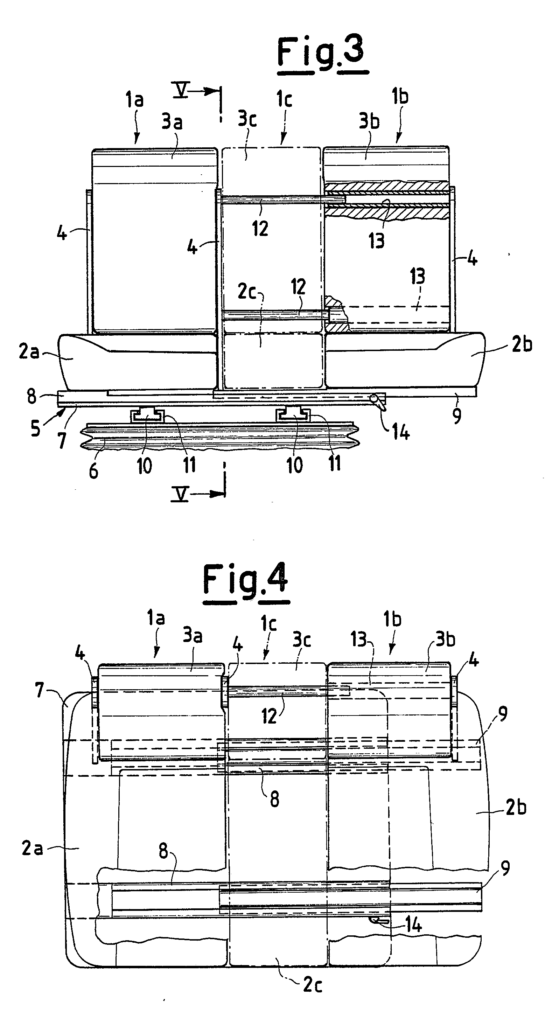

Thanks to the position of the guides 8, 9 under the sitting portion of the seat part 1b, and of the guides 12, 13 in correspondence of the back portion 3b, the seat portion 1b can be spaced apart from the seat part 1a, up to reach an end-stroke position, defined by stop elements provided on the guides, and not shown for the sake of simpleness. In this position, shown in Figures 3 and 4, between the two seat parts 1a and 1b, a third seat part 1c can be inserted with possibility of removal, with also this third part 1c being provided with a sitting portion 2c and a back portion 3c, either as a single piece, or as two mutually separated pieces. In this way, the seat 1 turns into a double seat capable of accomodating two persons. The outermost position of the seat part 1b can be made stable by means of mutual engagement means, e. g. , of snap type, provided in correspondence of the guides. In order to disengage it from this position, for example a lever 14 can be provided, which can be also used in order to disengage the two parts 1a and 1b of the seat 1 when they are in their mutually approached position.

The third seat part 1c can be inserted under pressure between the two seat parts 1a and 1b, in particular in case it is of stuffed type. It can be provided with engagement means 15, 16, which are given such a shape as to get respectively spring-like locked on the guide elements 12 and 8. In this way, purposely provided fastening means are not necessary, and the transformation of the seat 1 from a single-person seat into a double-person seat, and the contrary, can be easily achieved without any tools having to be used.

The third seat part 1c has a width which, owing to structural reasons, on taking into account the longest stroke possible for the seat part 1b, must be smaller than the width of the seat parts 1a and 1b.

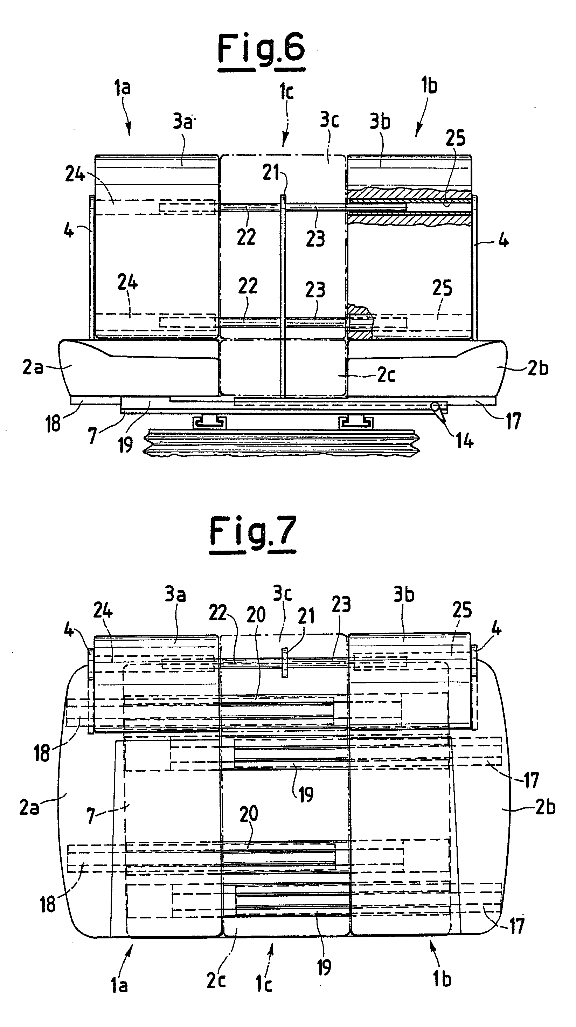

In the examples disclosed till now, only one part of the seat 1 is mobile. However, both seat parts can be made mobile, relatively to a vertical axial plane, e.g., symmetrically mobile relatively to such a plane, as shown in Figures 6 and 7.

In this case, each seat portion 2a and 2b is respectively provided, on its lowermost side, with a pair of guides 17 and 18, cooperating with respective fixed guides 19 and 20, installed on the base plate 7, in a staggered position. On the central plane, a substantially vertical support 21 is provided. Said central, substantially vertical support 21 is prevented from horizontally moving, and from it pairs of rod-shaped guide elements 22 and 23 - spaced apart in height from, and parallel to, each other - protrude, on opposite sides, and penetrate respective pairs of tubular elements 24, 25, of the back portions 3a and 3b of the seat parts 1a and 1b.

In this form of practical embodiment, which enables the parts 1a and 1b to be shifted relatively to each other by a longer distance than as possible when one part only of the seat is made mobile, and therefore makes it possible a wider third, middle seat part 1c - e.g., having a width corresponding to that of the seat parts 1a and 1b - to be used, two disengaging levers 14, one lever on each side, are of course provided.

Inasmuch as owing to the shifting of both seat parts 1a and 1b, the position of the driver relatively to the drive control elements is altered, the possibility of adjusting the support base 5 relatively to the base bed 6 of the seat 1 is provided, so as to restore, in this way, the possibility of aligning a half of the seat with the drive control elements.

In both of the above disclosed forms of practical embodiment, telescopic guides could be provided between the parts, thus the stroke of the movable part, or of the movable parts, being increased, according to any possible needs.

As one can observe from the above disclosure, a seat according to the present invention does not occupy an additional room when it is used as a single-person seat, whilst, in its configuration as a double seat for two persons, it occupies a relatively small additional room, over the base bed, without anyway hindering the access to the drive position The elements which constitute the additional seat part can be easily stored in a non-cumbersome position inside the interior of the vehicle cab, e.g , they could be normally contained inside a bag fastened to the back portion of the single-person seat.

Of course, within the scope of the present invention, many modifications and different forms of practical embodiment can be supplied. For example, inside the room between the mutually spaced-apart parts 1a and 1b, a plurality of parts 1c could be inserted.

**Claims**

1. Seat for vehicles, in particular a driver's seat for tractors, of the type provided with a sitting portion and a back portion, characterized in that it comprises two flanked parts, separated according to a vertical longitudinal plane of the seat, and that at least one of said seat parts is movable relatively to a support base in the transversal direction to a position spaced apart from the other seat part, in which position between the two spaced-apart seat parts at least a third part can be inserted with possibility of removal, with said third part being provided with a sitting portion and a back portion.

2. Seat according to claim 1, characterized in that the support base is provided with transversal guides on which said at least one movable part of the seat can slide.

3. Seat according to claim 1 or 2, characterized in that one of said seat parts is integral with said base.

4. Seat according to claim 1 or 2, characterized in that both said seat parts are symmetrically movable relatively to a vertical longitudinal middle plane of the seat.

5. Seat according to one or more of the preceding claims, characterized in that said base can be adjusted as to its longitudinal position on a seat base bed.

6. Seat according to one or more of the preceding claims, characterized in that guides are provided for the back portion of at least one of said two seat parts.

7. Seat according to one or more of the preceding claims, characterized in that the guides of the sitting portion and/or of the back portion are telescopic guides.

8. Seat according to one or more of the preceding claims, characterized in that said third part can be inserted under pressure between said two mutually spaced apart seat parts.

9. Seat according to one or more of the preceding claims, characterized in that said third seat part is provided with engagement means, suitable for getting engaged with guide elements of the movable seat part, or of the movable seat parts.

10. Seat according to one or more of the preceding claims, characterized in that said third part is provided with a sitting portion and a back portion as one single piece.

11. Seat according to one or more of claims from 1 to 8, characterized in that said third part is provided with a sitting portion and a back portion which are separated fom each other, and are engageable with relevant guide elements of the sitting portion and of the back portion of said at least one movable seat part.

12. Seat according to one or more of the preceding claims, characterized in that said seat parts are symmetrical seat parts, having a same width.

13. Seat according to one or more of the preceding claims, characterized in that said third part has a width substantially corresponding to the width of the other two seat parts.

14. Seat according to one or more of the preceding claims, characterized in that it is formed by two half-cradles, with respective integral half-sitting-planes and half-back-portions

15. Seat according to one or more of claims from 1 to 11, characterized in that is it constituted by two half integral-seats, each of which is provided with a half sitting-plane and a half back-portion.

16. Seat according to one or more of the preceding claims, characterized in that said base can be adjusted as to its transversal position relatively to a seat base bed.

Fig.1

Fig.5

Fig.2

# Fig.3

# Fig.4

# Fig.6

# Fig.7